Europäisches Patentamt

European Patent Office

Office européen des brevets

(19)

(11) Numéro de publication : **0 500 447 A1**

(12) # DEMANDE DE BREVET EUROPEEN

(21) Numéro de dépôt : 92400420.3

(22) Date de dépôt : 18.02.92

(51) Int. Cl.$^5$ : **C04B 35/56,** F16C 33/16,
C04B 38/00, F16C 33/04

(30) Priorité : 22.02.91 FR 9102135

(43) Date de publication de la demande :
26.08.92 Bulletin 92/35

(84) Etats contractants désignés :
BE CH DE DK ES FR GB IT LI LU NL SE

(71) Demandeur : CERAMIQUES ET COMPOSITES
Les Miroirs - Défense 3, 18, avenue d'Alsace
F-92400 Courbevoie (FR)

(72) Inventeur : Azema, Olivier
39, rue Massey
F-65000 Tarbes (FR)
Inventeur : Bougoin, Michel
101, rue du 11 Novembre
F-65800 Aureilhan (FR)

(74) Mandataire : Dubruc, Philippe et al
RHONE-POULENC CHIMIE Service
IOM/BREVETS, 25,quai Paul Doumer
F-92408 Courbevoie (FR)

(54) Corps fritté à zone poreuse, en carbure de silicium notamment, pour garniture mécanique et garniture comportant un tel corps fritté.

(57) L'invention concerne un corps fritté, notamment en carbure de silicium, utilisable comme pièce de frottement.
Selon l'invention, le corps fritté est caractérisé en ce qu'il comprend une première zone en un premier matériau céramique poreux et une seconde zone en un second matériau céramique non poreux.
Le corps fritté de l'invention peut être utilisé dans les garnitures mécaniques.

Figure 1

EP 0 500 447 A1

Jouve, 18, rue Saint-Denis, 75001 PARIS

La présente invention concerne un corps fritté, comprenant une zone poreuse, en carbure de silicium notamment, pour garniture mécanique et une garniture comportant un tel corps fritté.

Les garnitures mécaniques sont des montages bien connus comprenant deux bagues en glissement l'une sur l'autre pour faire joint d'étanchéité d'arbre rotatif de pompe sur des moteurs d'automobiles par exemple.

Pour ces garnitures, on utilise de plus en plus des bagues en matériaux céramiques et par exemple des associations carbure de silicium fritté pour une bague et matériau à base de carbone, notamment de graphite, pour la contre-bague.

Il a été récemment préconisé d'utiliser dans ces garnitures des matériaux céramiques poreux.

Cependant, la présence de pores au sein de ces matériaux entraîne une diminution de leur résistance mécanique et de leur conductivité thermique.

L'objet principal de l'invention est la mise au point d'un matériau céramique utilisable en frottement, notamment dans une garniture mécanique et présentant une résistance mécanique et une conductivité thermique améliorées par rapport à celles des matériaux poreux.

Un autre objet de l'invention est de procurer un matériau qui, tout en ayant une résistance mécanique et une conductivité thermique améliorées, diminue l'usure de la contre-bague, tout particulièrement pour des vitesses de rotation élevée.

Dans ce but, le corps fritté selon l'invention est caractérisé en ce qu'il comprend une première zone en un premier matériau céramique poreux et une seconde zone en un second matériau céramique non poreux.

Le corps fritté selon l'invention possède une résistance mécanique élevée qui se traduit par une contrainte de rupture pouvant être de l'ordre du double de celle du matériau poreux.

En outre, on a pu constater après des essais de longues durées (1000 heures) et pour des vitesses de rotation élevées (supérieures à 6000 T/mn) une très bonne étanchéité des garnitures utilisant les corps frittés de l'invention.

D'autres caractéristiques et détails de l'invention apparaitront plus clairement à la lecture de la description qui va suivre en référence aux figures annexées pour lesquels :

– la figure 1 est une photographie prise au microscope électronique d'un corps selon l'invention montrant l'ensemble de la zone poreuse de celui-ci

– la figure 2 est une photographie du même type mais à l'interface entre la zone poreuse et la zone non poreuse.

En ce qui concerne tout d'abord la nature des matériaux céramiques précités, on notera que le premier matériau formant la première zone et le second formant la seconde zone peuvent être identiques ou différents.

En cas d'utilisation de matériaux différents, il est préférable que ces matériaux obéissent à des conditions de frittage qui soient compatibles.

Selon un mode de réalisation particulier de l'invention, on utilise le même matériau pour la première et la seconde zone.

Différents types de céramiques peuvent être employés.

On peut citer les matériaux à base d'alumine, de zircone, d'alumine-zircone, de nitrure d'aluminium (AlN), de carbure de bore $B_4C$.

Toutefois, selon un mode de réalisation préféré de l'invention, on peut mentionner le nitrure de silicium ($Si_3N_4$) et le carbure de silicium (SiC). Pour ce dernier, on peut utiliser le SiC a ou le SiC β ou encore des combinaisons de ces deux polytypes dans des proportions quelconques.

Les matériaux céramiques de chacune des zones peuvent comprendre en outre tous les additifs habituels et bien connus de frittage, comme par exemple le carbone, le bore, ou l'aluminium pour le SiC, l'oxyde d'yttrium, le spinelle et l'alumine pour $Si_3N_4$, l'oxyde d'yttrium pour AlN, ou bien aussi les stabilisants de la zircone tels que l'oxyde d'yttrium, de magnésium, de calcium ou de cérium.

L'invention s'applique aussi aux corps frittés dans lesquels les matériaux précités peuvent être du type composite, c'est-à-dire à base de plusieurs phases et notamment à base de carbone libre en particulier sous forme graphite et/ou de nitrure de bore. Ainsi, on peut mentionner les composites SiC/C, $Si_3N_4$/BN, AlN/BN, $Al_2O_3$/BN.

On peut envisager notamment des composites à base de SiC et comprenant jusqu'à 48% en poids de carbone libre, notamment jusqu'à 20% et plus particulièrement jusqu'à 10%, ce carbone pouvant se présenter sous forme d'un mélange carbone amorphe - carbone graphite dans des proportions quelconques.

Les corps du type composite comprenant du graphite de même que ceux comportant du nitrure de bore sont particulièrement intéressants car ils possèdent des propriétés lubrifiantes améliorées par diminution du coefficient de frottement.

Enfin, les matériaux céramiques utilisés dans le cadre de l'invention présentent une taille de grains qui est généralement comprise entre 0,5 et 500μm, de préférence entre 0,5 et 20μm.

Selon une caractéristique essentielle de l'invention, le corps fritté comprend une première partie ou zone qui est poreuse et une autre partie ou seconde zone qui ne présente pas de porosité.

Selon un mode de réalisation préféré, cette première partie poreuse constitue une zone superficielle, en surface de la seconde zone.

La zone poreuse présente, de préférence, une épaisseur d'au moins 20µm, plus particulièrement d'au moins 50µm et notamment comprise entre 100 et 1000µm.

Une autre caractéristique importante est la porosité totale du matériau de la première zone.

Cette porosité peut être très importante dans la mesure où le corps fritté comprend en outre une partie non poreuse sur laquelle s'appuie la partie poreuse. Toutefois, il est préférable que cette porosité ne dépasse pas 50%, plus particulièrement elle est d'au plus 18%, c'est dans ce cas qu'on obtient une étanchéité maximale.

D'autre part, cette porosité est d'au moins 4%.

On entend par porosité totale, celle obtenue en prenant en compte les pores ouverts et fermés. Dans le cas particulier de composites, cette porosité (P), exprimée en %, est donnée par la formule :

$$P = 100 - \left[ \frac{d \quad x}{d_2} + \frac{100 - x}{d_1} \right]$$

dans laquelle $d_1$ est la masse volumique de la phase majoritaire (par exemple SiC ou $Si_3N_4$) du composité, $d_2$ la masse volumique de la phase minoritaire (par exemple C ou BN), d la masse volumique apparente du corps et x le pourcentage massique de la phase minoritaire présente dans le corps.

Dans le cas particulier d'un composite SiC/C, cette formule serait :

$$P = 100 - \left[ \frac{d \quad x}{2,25} + \frac{100 - x}{3,21} \right]$$

d étant tel que défini précédemment et x étant le pourcentage massique de carbone libre contenu dans le matériau; 2,25 étant la masse volumique du carbone libre et 3,21 celle du carbure de silicium.

Par ailleurs, le matériau poreux formant la première zone du corps fritté peut présenter des pores dont le diamètre moyen peut varier dans une large gamme allant habituellement de 10 à 500µm.

Ce diamètre moyen est celui obtenu sur la base de valeurs mesurées par examen au microscope électronique à balayage.

Les pores du corps selon l'invention se présentent sous une forme sphérique ou sous une forme voisine de la sphère. Cette forme permet d'atteindre des porosités élevées en assurant une étanchéité totale du corps.

D'autre part, ces pores sont essentiellement des pores fermés.

En ce qui concerne par ailleurs le matériau constituant la seconde zone non poreuse, celui-ci présente de préférence une densité aussi élévée que possible. Le matériau a de préférence une porosité totale inférieure à 4%.

Enfin, une caractéristique du corps de l'invention réside dans la continuité parfaite qui existe entre les deux zones, tout particulièrement dans le cas où ces deux zones sont constituées du même matériau.

On peut observer ainsi une absence totale de fissures entre les zones, on ne peut pas distinguer une discontinuité entre celles-ci.

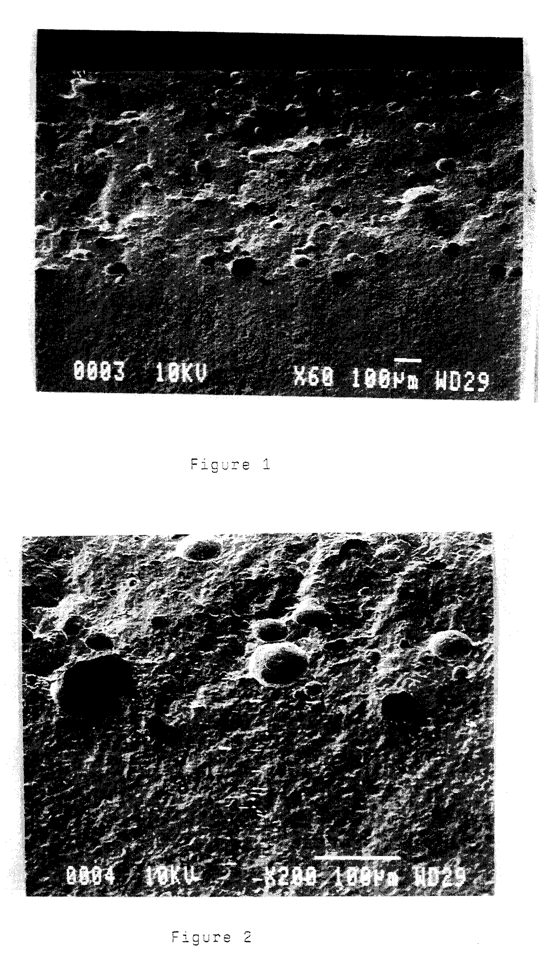

Ceci apparaît nettement sur la photo de la figure 2.

Des modes de réalisation plus particuliers vont être décrits.

Il est à noter que ces modes de réalisation peuvent s'appliquer aux différents types de matériaux mentionnés plus haut mais selon une variante préférée, le matériau utilisé est le SiC.

Selon un mode de réalisation particulier du corps fritté de l'invention, le premier matériau présente un diamètre moyen de pores compris entre 40 et 200µm.

On s'est aperçu que pour un diamètre moyen de pores inférieur à 40µm, on observait une usure plus élevée au moins sur la contre-bague de la garniture mécanique notamment quand celle-ci est en graphite.

Par ailleurs, c'est en deça d'un diamètre moyen de 200µm, que la résistance mécanique de la première zone du corps fritté est optimale.

Il peut être avantageux aussi d'avoir un diamètre moyen de pores d'au moins 50µm, et plus particulièrement

d'au moins 60µm. C'est ainsi que selon différentes variantes de l'invention, on pourra envisager des corps frittés présentant un diamètre moyen de pores compris entre 50 et 200µm, et plus particulièrement 60 et 200µm.

Selon un autre mode de réalisation encore plus particulier de corps fritté de l'invention, le matériau pourra avoir une valeur maximale du diamètre des pores de 150µm, et plus particulièrement une valeur qui se situe dans la gamme 40 - 150µm.

Il pourra être avantageux d'avoir un diamètre de pore compris entre 50 et 150µm, et plus spécialement 60 et 150µm et encore plus particulièrement 60 et 100µm.

Enfin la porosité peut varier dans la fourchette de 50 à 4% indiquée plus haut, mais de préférence, le premier matériau présente une porosité comprise entre 4 et 18%, notamment entre 5 et 15% et plus particulièrement 8 et 15%.

Le procédé de préparation des corps frittés selon l'invention va maintenant être décrit.

En ce qui concerne le matériau pour la zone poreuse, celui-ci peut être obtenu par un procédé qui consiste à ajouter un agent porogène sous forme de microbilles ou de granulés au mélange des produits destinés à la préparation du matériau fritté.

La mise en oeuvre de l'agent porogène peut se faire de plusieurs manières. Par exemple, on peut former dans un broyeur à boulets une barbotine à base du matériau céramique de départ, des additifs de frittage et d'un liant dans l'eau ou dans un solvant organique. A cette barbotine, on ajoute ensuite sous agitation l'agent porogène. On sèche enfin par atomisation.

Une autre manière consiste à former puis à sécher une barbotine du type décrit ci-dessus, mais sans l'agent porogène. Au produit sec ainsi obtenu, on mélange alors à sec cet agent.

Les agents porogènes utilisables sont bien connus. Ce sont généralement des produits organiques du type polymère. On utilise de préférence des produits obtenus à partir d'une polymérisation en émulsion. Ces produits ne doivent pas être solubles dans l'eau ou le solvant organique utilisé dans la composition de la barbotine. Ils doivent aussi pouvoir supporter thermiquement le séchage par atomisation notamment.

On peut citer comme exemple le polystyrène, le polyméthacrylate de méthyle, le polyamide.

Le matériau dense se prépare d'une manière bien connue par formation d'une barbotine du même type que celle décrite ci-dessus, bien entendu sans agent porogène.

Une étape ultérieure du procédé est la mise en forme.

Cette mise en forme peut se faire par pressage isostatique ou uniaxial des produits secs obtenus précédemment.

Ce pressage se déroule d'une manière connue en soi.

Par exemple, dans le cas d'un pressage uniaxial, on peut remplir dans un premier temps le moule de pressage d'une première couche de produit sec contenant le porogène, puis dans un deuxième temps disposer sur cette première couche une certaine quantité de produit sec exempt de porogène.

Une autre méthode de mise en forme peut être utilisée par coulage d'une première barbotine comprenant du porogène dans un moule en plâtre, puis dans un deuxième temps par coulage dans le même moule d'une barbotine sans porogène.

Après la mise en forme, on obtient une pièce crue et d'une manière connue, on traite thermiquement cette pièce crue afin d'éliminer les liants et l'agent porogène et, dans le cas du SiC, de pyrolyser le précurseur du carbone additif de frittage.

La pièce est frittée ensuite d'une manière connue en soi.

La température de frittage dépend du matériau et se situe généralement entre 1400 et 2500°C. On procède suivant la nature du matériau sous vide ou sous azote ou gaz neutre.

L'invention concerne aussi les garnitures mécaniques comportant une bague fixe et une bague rotative dont au moins une est constituée du corps fritté tel qu'il vient d'être décrit plus haut.

L'autre bague peut être réalisée dans un matériau à base de carbone et notamment en carbone imprégné de résine. Ce matériau peut aussi être en carbure de silicium ou en nitrure de silicium; ce peut être aussi un corps en alumine frittée. Ce peut encore être un matériau de type métallique par exemple acier au carbone.

On peut enfin mettre en oeuvre une garniture dans laquelle les deux bagues seraient constituées du corps fritté selon l'invention.

Le corps fritté de l'invention peut être aussi utilisé dans des paliers.

Bien entendu, le corps fritté de l'invention peut être utilisé dans d'autres applications que les garnitures mécaniques.

Ainsi, il peut servir dans tout système frottant du type par exemple butée, palier ou glissière comportant au moins une pièce en frottement constituée par ledit corps ou dont une partie est constituée dudit corps. On peut ainsi l'employer par exemple dans des paliers et dans les configurations suivantes : alésage en corps fritté - arbre métallique, alésage en corps fritté - arbre en corps fritté, alésage en corps fritté - arbre métallique avec chemise en corps fritté ou graphite.

Un exemple va maintenant être donné.

EXEMPLE

Préparation des bagues

On forme une première barbotine à 60% d'extrait sec dans l'eau comprenant 1% de bore, une résine phénolique apportant 1,5% de carbone après pyrolyse et 3% de polyéthylène glycol. Cette première barbotine contient à titre de porogène 6% en poids par rapport au SiC de PLEXIGUM M 914 (polyméthacrylate de méthyle) de taille moyenne des grains de 90$\mu$m.

Le porogène a été mélangé à la barbotine sous agitation.

Une seconde barbotine est préparée identique à la première, mais sans agent porogène.

Les barbotines sont ensuite séparémment séchées et granulées par atomisation.

On introduit dans un moule de pressage une première couche de produit sec contenant du porogène, puis une seconde couche de produit sec sans porogène. On presse ensuite à 1500 bars pour obtenir une pièce crue.

Après un traitement thermique sous azote jusqu'à 600°C qui permet notamment l'élimination du porogène et la pyrolyse de la résine phénolique, la pièce est ensuite frittée à 2070°C sous argon pendant 1 heure.

On obtient une bague de diamètre interne 19 mm, de diamètre externe de 28 mm, son épaisseur totale est de 3,5 mm. La zone poreuse a 0,78 mm d'épaisseur et sa porosité totale est de 13%, le diamètre moyen des pores étant de 80$\mu$m. En ce qui concerne la zone poreuse, la porosité totale du matériau qui la constitue est de 2,5%.

Essais

On teste la bague après rodage de la surface de frottement comme bague de glissement rotative dans une garniture mécanique. La contre-bague de glissement fixe est en carbone graphite.

Les conditions de l'essai sont les suivantes :

– température : 130°C
– fluide : antigel pur
– vitesse de rotation : 6700 T/min
– Pression : 1 bar
– Durée de l'essai : 1000 heures.

On mesure après l'essai les ondulations sur la contre-bague celles-ci sont très faibles, c'est-à-dire qu'elles présentent une hauteur d'au plus 0,1$\mu$m.

Après un test en étanchéité statique à 20 bars, la bague est étanche, ce qui montre que la porosité est entièrement fermée.

On réalise par ailleurs des essais mécaniques en flexion 3 points à 20°C sur des éprouvettes de dimension 25 x 5 x 3 mm.

L'éprouvette $E_1$ est constituée d'un corps fritté selon l'invention. Ce corps comprend une zone poreuse de 700$\mu$m d'épaisseur dont la porosité totale est de 13% et de diamètre moyen de pores de 80$\mu$m.

L'éprouvette $E_2$ est constituée d'un corps fritté entièrement poreux dont les caractéristiques sont identiques à celles données ci-dessus pour la zone poreuse de l'éprouvette $E_1$. Les deux corps ont été préparés d'une manière analogue à celle décrite pour la préparation des bagues, étant entendu que seule la barbotine avec agent porogène a été utilisée pour fabriquer $E_2$.

Dans le cas de l'éprouvette $E_1$, la zone comprimée, lors du test, est la zone poreuse.

On obtient les résultats suivants :

| | $E_1$ | $E_2$ |
|---|---|---|
| contrainte de rupture moyenne $\sigma_f$ (MPa) | 446 | 213 |
| module de Weibull m | 17 | 20 |

## Revendications

**1 -** Corps fritté caractérisé en ce qu'il comprend une première zone en un premier matériau céramique poreux et une seconde zone en un second matériau céramique non poreux.

**2 -** Corps fritté selon la revendication 1, caractérisé en ce que les matériaux céramiques précités sont à base d'au moins un élément choisi parmi l'alumine, la zircone, l'alumine zircone, le nitrure d'aluminium, le carbure de bore.

**3 -** Corps fritté selon la revendication 1, caractérisé en ce que les matériaux céramiques précités sont à base d'au moins un élément choisi parmi le carbure de silicium et le nitrure de silicium.

**4 -** Corps fritté selon la revendication 2 ou 3, caractérisé en ce que les matériaux céramiques précités sont à base en outre de carbone, notamment graphite et/ou de nitrure de bore.

**5 -** Corps fritté selon l'une des revendications précédentes, caractérisé en ce que les premiers et seconds matériaux précités sont identiques.

**6 -** Corps fritté selon l'une des revendications précédentes, caractérisé en ce que la première zone précitée est une zone superficielle.

**7 -** Corps fritté selon l'une des revendications précédentes, caractérisé en ce que la première zone précitée présente une épaisseur d'au moins 20$\mu$m, plus particulièrement d'au moins 50$\mu$m et notamment comprise entre 100 et 1000$\mu$m.

**8 -** Corps fritté selon l'une des revendications précédentes, caractérisé en ce que le premier matériau céramique présente une porosité totale d'au plus 50%, plus particulièrement d'au plus 18%.

**9 -** Corps fritté selon l'une des revendications précédentes, caractérisé en ce que le premier matériau céramique présente des pores dont le diamètre moyen est compris entre 10 et 500$\mu$m.

**10 -** Corps fritté selon l'une des revendications précédentes, caractérisé en ce que le premier matériau présente des pores dont le diamètre moyen est compris entre 40 et 200$\mu$m.

**11 -** Corps fritté selon la revendication 10, caractérisé en ce que le premier matériau présente un diamètre moyen de pores compris entre 50 et 200$\mu$m, et plus particulièrement entre 60 et 150$\mu$m.

**12 -** Corps fritté selon la revendication 10 ou 11, caractérisé en ce que le premier matériau présente une porosité comprise entre 4 et 18%, notamment entre 5 et 15%, et plus particulièrement entre 8 et 15%.

**13 -** Garniture mécanique comportant une bague fixe et une bague rotative, caractérisée en ce qu'au moins une des bagues est constituée du corps fritté selon l'une des revendications 1 à 11.

**14 -** Système du type butée, palier ou glissière comportant au moins une pièce en frottement constituée par un corps selon l'une des revendications 1 à 11 où dont une partie est constituée dudit corps.

Figure 1

Figure 2

Office européen
des brevets

**RAPPORT DE RECHERCHE EUROPEENNE**

Numero de la demande

EP    92 40 0420

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 843 691 (TANKEN SEIKO K.K. ET AL.) | 1,5-14 | C04B35/56 |
| Y | * revendication 2; exemple 5 * | 2-4 | F16C33/16 |
| | --- | | C04B38/00 |
| Y | EP-A-0 165 584 (HITACHI, LTD.) | 2 | F16C33/04 |
| | * revendications 1,3,4 * | | |
| | --- | | |
| Y | CHEMICAL ABSTRACTS, vol. 107, no. 120, 16 Novembre 1987, Columbus, Ohio, US; abstract no. 182032V, K.NISHIO: 'Sintered ceramic thrust washers for mechanical seals' page 382 ; colonne 2 ; * abrégé * | 3 | |
| | --- | | |
| Y | DE-A-3 329 225 (NGK SPARK PLUG CO., LTD.) | 3,4 | |
| | * revendications 1,4-7 * | | |
| | --- | | |
| Y | DE-A-3 436 150 (NIPPON MEKTRON, LTD.) | 4 | |
| | * revendications 3-5 * | | |
| | ----- | | |

**DOMAINES TECHNIQUES RECHERCHES (Int. Cl.5)**

C04B
F16C

Le présent rapport a été établi pour toutes les revendications

| Lieu de la recherche | Date d'achèvement de la recherche | Examinateur |
|---|---|---|
| LA HAYE | 19 MAI 1992 | HAUCK H.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0462)